# EUROPEAN PATENT APPLICATION

(11) **EP 4 287 355 A1**
(43) Date of publication of application: **06.12.2023**
(21) Application number: 23173401.3
(22) Date of filing: 15.05.2023
(51) Int. Cl.: H01M 10/613, H01M 10/647, H01M 50/209, H01M 50/224, H01M 50/227, H01M 50/231, H01M 50/264, H01M 50/291, H01M 10/6554

(54) **BATTERY ASSEMBLY AND METHOD FOR MANUFACTURING BATTERY ASSEMBLY**

(30) Priority: 25.05.2022 JP 2022084954
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KONDO, Atsumi, Kanagawa, 212-0013 (JP); HAGIWARA, Keizo, Kanagawa, 212-0013 (JP); YOSHINARI, Hiroaki, Kanagawa, 212-0013 (JP)
(74) Representative: AWA Sweden AB

(57) **Abstract**

According to one embodiment of a battery assembly (1), a resin case (5) contains cells (12) arranged in parallel while interposing separators (13) between the cells. The battery assembly includes a metal plate (21) whose upper surface (212) faces a bottom plate (55) of the resin case and bottom surfaces (125) of the cells. An adhesive retaining agent (47) bonds the bottom surfaces of the cells to the bottom plate (55) of the resin case. An adhesive (49) bonds the bottom plate of the resin case to an insulating layer (214) provided on the metal plate. A plastic material (41) is inserted in a frame hole (554) penetrating the bottom plate of the resin case. The plastic material (41) is closely in contact with the bottom surfaces (125) of the cells and the insulating layer (214) while being compressed between the bottom surfaces of the cells and the insulating layer.

## Description

### FIELD

An embodiment described herein relates generally to a battery assembly and a method for manufacturing the battery assembly.

### BACKGROUND

A battery assembly, in which a plurality of battery cells are electrically connected by conductive members, has been known. Such a battery assembly is used as power sources for vehicles, electronic devices, and other industrial applications.

In a conventional battery assembly, a plurality of cells is connected together on terminal sides thereof in series/parallel by a bus bar or the like so as to obtain desired voltage and current. The cells are contained and arranged in a resin case while interposing separators serving as partition walls between the cells. In order to externally dissipate and conduct heat generated by charging and discharging the cells in the resin case, a technology has been developed, in which a metal plate provided with an insulating layer is provided on the underside of the cells to dissipate the heat through the metal plate. In this case, a plastic material is closely attached to bottom surfaces of the cells and to the insulating layer provided on the metal plate.

The conventional resin case is separately provided with counterbores for low-headed flat head screws and through-holes for inserting bolts. In the conventional resin case, the above-mentioned plate-like plastic material is disposed between the resin case and the cells in order to absorb a variation in height of each of the bottom surfaces of the cells (irregularities in the order of micrometers on the bottom surface). In addition, the metal plate including the insulating layer is provided below the plastic material for filling the irregularities. Then, the cells, the metal plate including the insulating layer, and the plastic material are fixed together by, for example, inserting the flat head screws from the lower surface side of the resin case into the counterbores for the low-headed flat head screws, and fastening the flat head screws. Moreover, a cooling plate and other components are disposed below the metal plate including the insulating layer while interposing a plastic sheet between them. The metal plate, the resin case, the cooling plate, and the other components are fastened together by the bolts inserted into through holes.

However, since the resin case is provided with the counterbores in addition to the through-holes, issues to be considered in design, such as reduction of strength around the counterbores, may increase. In addition, more man-hours are required for the fixation because the flat head screws are inserted into the counterbores, and the bolts are inserted into the through-holes. If the heads of the flat head screws protrude from the contact surface on the cooling plate side, backlash or wobbling occurs between the cooling plate, the metal plate, and the plastic material, thus increasing contact thermal resistance to inhibit heat dissipation of the cells. To prevent this problem, if the depth of the counterbores in the resin case is increased so as to prevent the flat head screws from protruding from the cooling plate side surface of the metal plate provided with the insulating layer, the thickness of the metal plate provided with the insulating layer needs to be made relatively thicker, which increases the size and weight of the battery assembly.

Therefore, in the battery assembly, there is a need for improving manufacturability and ensuring both battery cooling and heat dissipation performance.

### BRIEF DESCRIPTION OF THE DRAWINGS

FIG. 1 is a perspective view of a battery assembly of an embodiment viewed from a bottom plate side.
FIG. 2 is a perspective view illustrating an example of a cell of the battery assembly of the embodiment.
FIG. 3 is a perspective view illustrating the battery assembly of the embodiment as disassembled components.
FIG. 4 is a perspective view illustrating part of a resin case of the battery assembly of the embodiment.
FIG. 5 is a perspective view of the battery assembly of the embodiment as viewed from above in a state where part (a top panel) of the resin case is removed.
FIG. 6 is a sectional view illustrating an example of part of a metal plate whose upper surface is provided with an insulating layer.
FIG. 7 is a sectional view illustrating another example of the metal plate whose upper surface is provided with the insulating layer.
FIG. 8 is a schematic sectional view of the battery assembly of the embodiment.
FIG. 9 is an example of a circuit configuration formed by the battery assembly of the embodiment.
FIG. 10 is a sectional view explaining a state where an adhesive providing step and a bonding step have been performed, and a plastic material is inserted in a frame hole of a bottom plate of the resin case at a fixing step in a method for manufacturing the battery assembly of the embodiment.
FIG. 11 is a sectional view explaining a state at the fixing step where the plastic material is closely attached to the insulating layer, and the resin case is adhesively fixed to the insulating layer with the adhesive, while the cells are pressed toward the plastic material to deform the plastic material.
FIG. 12 is a sectional view explaining a fastening step in the method for manufacturing the battery assembly of the embodiment.
FIG. 13 is a sectional view illustrating an example of the battery assembly provided with Kapton (registered trademark) tape.

### DETAILED DESCRIPTION

A battery assembly (1) according to one embodiment includes a plurality of cells (12), a resin case (5), a metal plate (21), an insulating layer (214), an adhesive retaining agent (47), an adhesive (49), and a plastic material (41). The resin case (5) is configured to contain the cells (12) arranged in parallel while interposing separators (13) between the cells (12). The metal plate (21) has an upper surface (212) that faces a bottom plate (55) of the resin case (5) and faces bottom surfaces (125) of the cells (12). The insulating layer (214) is provided on the upper surface (212) of the metal plate (21). The adhesive retaining agent (47) is configured to bond the bottom surfaces (125) of the cells (12) contained in the resin case (5) to the bottom plate (55) of the resin case (5). The adhesive (49) is configured to bond the bottom plate (55) of the resin case (5) to the insulating layer (214). The plastic material (41) is inserted in a frame hole (554) penetrating the bottom plate (55) of the resin case (5). The plastic material (41) is closely in contact with the bottom surfaces (125) of the cells (12) and the insulating layer (214) while being compressed between the bottom surfaces (125) of the cells (12) and the insulating layer (214).

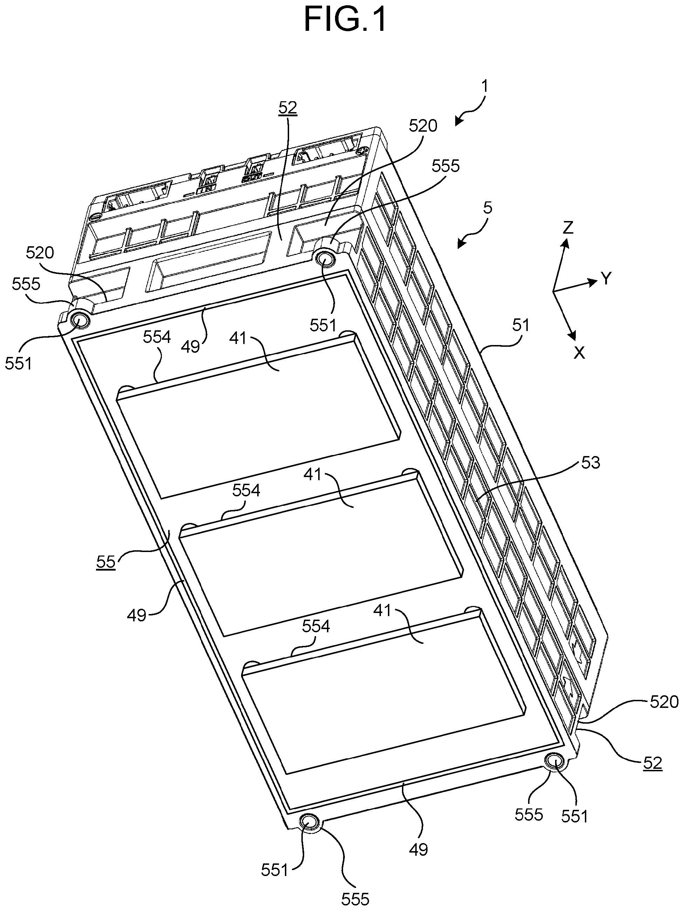

The following discloses an exemplary and schematic embodiment of a battery assembly 1 while making reference to FIGS. 1 to 5. In each of the following figures, directions (X-direction, Y-direction, and Z-direction) are defined for convenience. The X-, Y-, and Z-directions are orthogonal to each another.

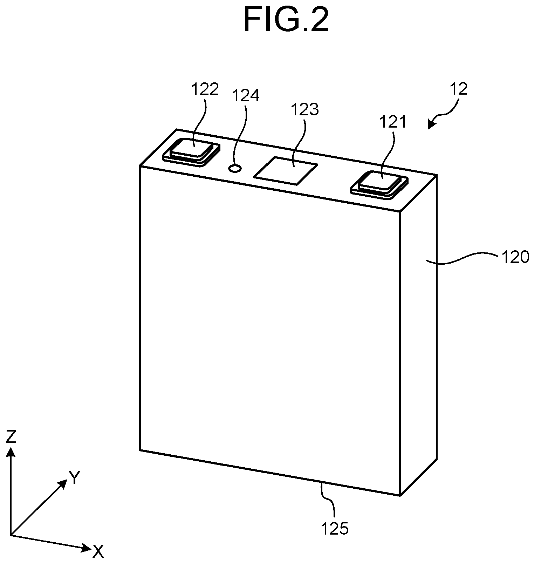

The following describes a cell 12 illustrated in FIG. 2, which is included in the battery assembly 1 of the embodiment illustrated in FIGS. 1, 3, 4, and 5. The cell 12 is also called, for example, "battery cell", "unit cell", or "battery". The cell 12 is, as an example, a non-aqueous electrolyte secondary battery such as a lithium-ion battery, and includes, for example, a flat or substantially cuboid-shaped outer container 120 formed of aluminum or an aluminum alloy, and an electrode body (not illustrated) contained with a non-aqueous electrolyte in the outer container 120.

The cell 12 includes two types of terminals, namely, a positive electrode terminal 121 and a negative electrode terminal 122, on an upper surface of the outer container 120 at both ends in the lateral direction (X-direction) of the cell 12. The positive electrode terminal 121 and the negative electrode terminal 122 are electrically connected to the electrode body (not illustrated). The cell 12 may also include a gas discharge valve 123 on the upper surface to discharge a gas generated in the outer container 120, and include an electrolyte pouring port 124 for pouring the non-aqueous electrolyte into the outer container 120. A bottom surface 125 of the outer container 120 is substantially a flat surface.

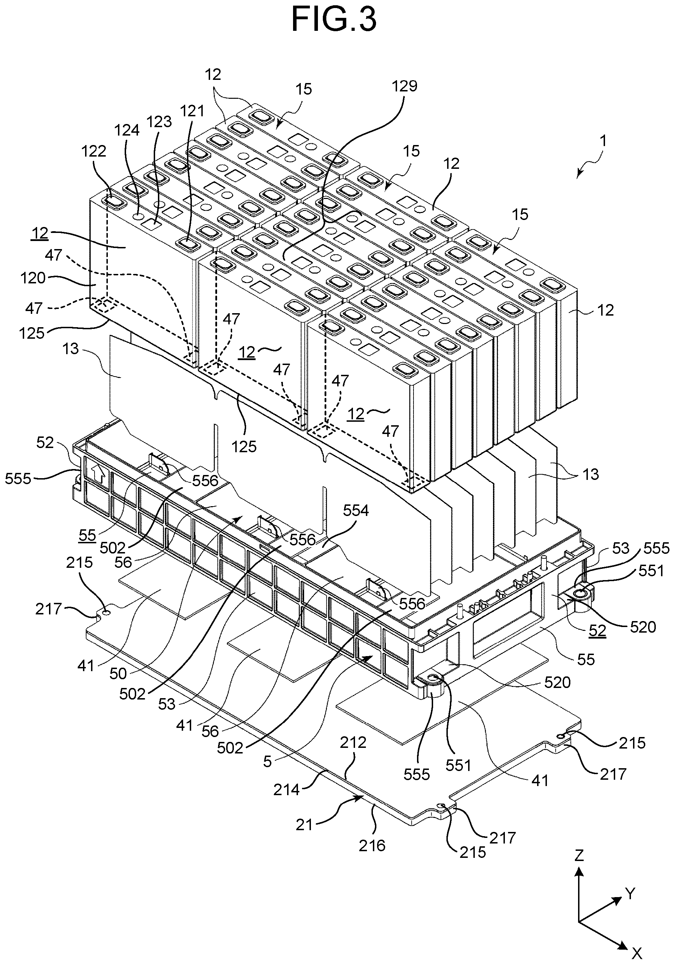

In the battery assembly 1 illustrated in FIG. 3, the positive electrode terminal 121 and the negative electrode terminal 122 of each cell 12 are electrically connected to a terminal connection surface of a bus bar (not illustrated) by being connected thereto by welding, for example. The battery assembly 1 contains a series connection structure of the cells 12 being electrically connected in series, and/or a parallel connection structure of the cells 12 being electrically connected in parallel.

The battery assembly 1 of the embodiment is installed in various devices, machines, equipment, and the like, and is used as a power source for those various devices, machines, and equipment. For example, the battery assembly 1 can be used as a mobile power source, such as a power source for automobiles and railway vehicles, and also as a stationary power source, such as a power source for a point-of-sales (POS) system. In addition, a plurality of the battery assemblies 1 illustrated in the present embodiment can be installed in the various devices and the like, as a set connected in series or parallel (for example, as a set stacked up and down in a shelf-like configuration). The number and the arrangement of the cells 12 included in the battery assembly 1 are not limited to those disclosed in the present embodiment. The battery assembly 1 is also called, for example, "battery module" or "battery device".

The battery assembly 1 illustrated in FIG. 3 in a disassembled state includes the cells 12, a resin case 5, a metal plate 21, an insulating layer 214, an adhesive retaining agent 47. The resin case 5 contains the cells 12 arranged in parallel while interposing separators 13 between the cells 12. The metal plate 21 has an upper surface 212 facing a bottom plate 55 of the resin case 5 and facing the bottom surfaces 125 of the cells 12. The insulating layer 214 is provided on the upper surface 212 of the metal plate 21. The adhesive retaining agent 47 bonds the bottom surfaces 125 of the cells 12 contained in the resin case 5 to the bottom plate 55 of the resin case 5.

The resin case 5 illustrated in FIGS. 1, 3, 4, and 5 is formed from an electrically insulating material. Examples of the material forming the resin case 5 include resins such as polyphenylene ether, polycarbonate, and polybutylene terephthalate.

The resin case 5 includes a lid-shaped top panel 51, a pair of side walls 52, a pair of side walls 53, and the bottom plate 55. The lid-shaped top panel 51 has a rectangular shape in a plan view (illustrated only in FIG. 1). The side walls 52 face each other in the long-side direction (X-direction) of the resin case 5. The side walls 53 face each other in the short-side direction (Y-direction) of the resin case 5.

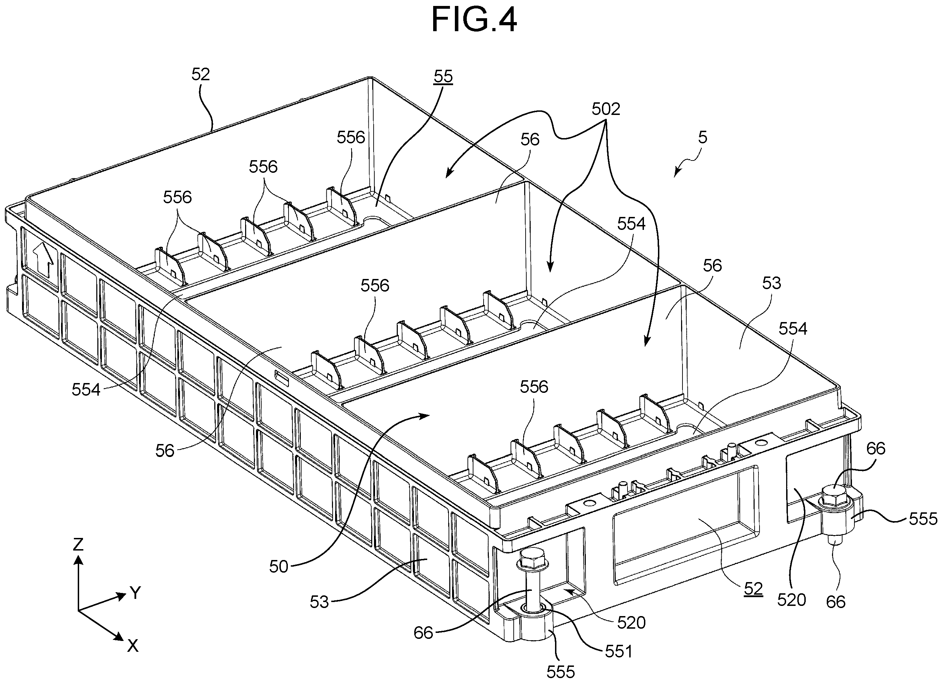

In the resin case 5, the top panel 51 and the bottom plate 55 face each other in the height direction (Z-direction) while interposing a housing chamber 50 illustrated in FIGS. 3 and 4. The side walls 52 and the side walls 53 are integrally connected, and surround the entire periphery of the lateral side of the housing chamber 50.

As illustrated in FIGS. 3 and 4, the resin case 5 includes two partition walls 56, for example. The partition walls 56 are arranged in the X-direction between the pair of the side walls 52 and are spaced out. Each of the partition walls 56 continuously extends along the height direction (Z-direction) between the top panel 51 (refer to FIG. 1) and the bottom plate 55. The two partition walls 56 divide the housing chamber 50 of the resin case 5 into three areas 502, as illustrated in FIGS. 3 and 4. That is, the partition walls 56 divide the housing chamber 50 into three portions in the X-direction.

For example, as illustrated in FIG. 3, each of the separators 13 is provided between a pair of the cells 12 which are adjacent to each other in the Y-direction. Each group of the cells 12 (for example, eight cells) arranged in the Y-direction is treated as a cell row 15. Each of the cell rows 15 is provided with one or more separators 13. In the example of FIG. 3, seven separators 13 are provided for one of the cell rows 15. Each of the separators 13 is formed from a material having at least an electrically insulating outer surface. Examples of the material forming at least the outer surface of the separators 13 include electrically insulating resins such as polyphenyl ether (PPE), polycarbonate (PC), and polybutylene terephthalate (PBT). In the resin case 5, the housing chamber 50 contains the cells 12 arranged in parallel while interposing the separators 13 between the cells 12. Each of the separators 13 is provided with engagement grooves that engage with the partition walls 56, and is supported by the partition walls 56.

As illustrated in FIGS. 3 to 5, the bottom plate 55 supports the cells 12 on the lower side in the Z-direction. Three frame holes 554 penetrate the bottom plate 55, as illustrated in FIG. 4. In the bottom plate 55, each of the frame holes 554 is formed in a position corresponding to a different one of the areas 502. The frame holes 554 are formed in, for example, a substantially rectangular shape in the plan view.

As illustrated in FIG. 4, division plates 556 are erected at equal intervals in the Y-direction in positions near a corresponding one of the frame holes 554 on the bottom plate 55. Each of the areas 502 is divided by the division plates 556 into the number of areas that is the same as the number of the cells 12 contained in the area 502. The division plates 556 provide appropriate positioning in the Y-direction for the cells 12 included in the cell row 15 illustrated in FIG. 3.

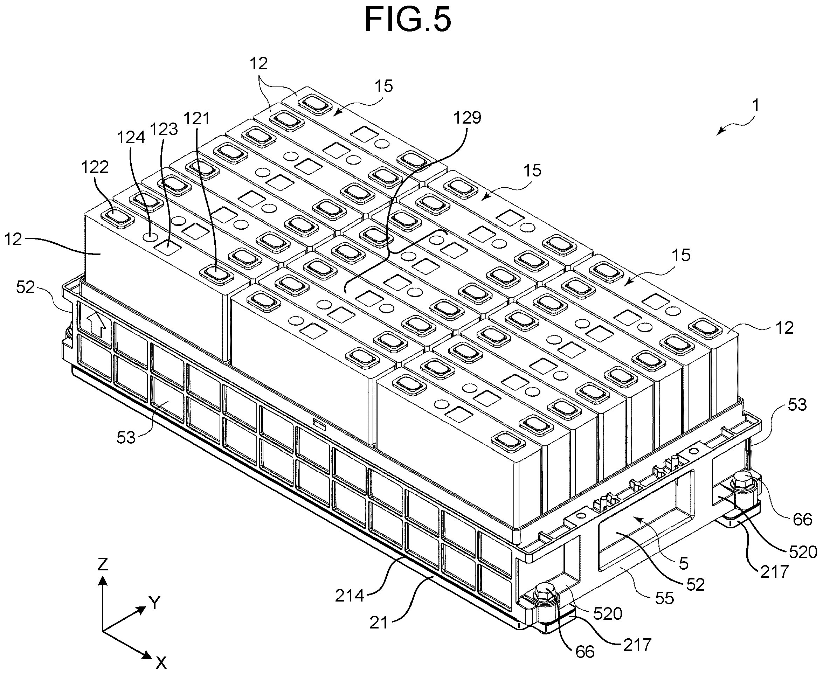

One of the cell row 15 illustrated in FIGS. 3 and 5 is constituted by eight of the cells 12, for example. In each of the cell rows 15, the cells 12 are arranged such that the lateral direction of the cells 12 is parallel or substantially parallel to the long-side direction (X-direction) of the resin case 5. In each of the three areas 502, the cell row 15 is supported by an area of the bottom plate 55 other than the frame hole 554. In the cell row 15, the depth direction of each of the cells 12 is parallel or substantially parallel to the short-side direction (Y-direction) of the resin case 5. In the cell row 15, the height direction of each of the cells 12 is parallel or substantially parallel to the height direction (Z-direction) of the resin case 5. One of the cells 12 in the cell row 15 is arranged so as to have almost no deviation in the Y- and Z-directions from one of the cells 12 in the same order in the Y-direction of another of the cell rows 15.

Each of the areas 502 of the housing chamber 50 illustrated in FIG. 4 is opened to the outside of the resin case 5 through a corresponding one of the frame holes 554 of the bottom plate 55. In each of the areas 502, the bottom plate 55 projects toward the inner periphery over the entire perimeter, and the projection end of the bottom plate 55 forms the edge of each of the frame holes 554 over the entire perimeter thereof.

The adhesive retaining agent 47 bonds the bottom surfaces 125 of the cells 12 contained in the resin case 5 to the upper surface of the bottom plate 55 of the resin case 5. As illustrated in FIG. 3, the adhesive retaining agent 47 is applied or attached to, for example, the bottom surface 125 of the outer container 120 of each of the cells 12. The adhesive retaining agent 47 is not applied or attached to the entire surface of the bottom surface 125 of each of the cells 12, and is not applied or attached to an area of the bottom surface 125 that is exposed from the frame hole 554 and faces a plastic material 41. In the example illustrated in FIG. 3, the adhesive retaining agent 47 is provided at two points on both sides in the X-direction of the bottom surface 125 of each cell 12.

The adhesive retaining agent 47 illustrated in FIG. 3 is, for example, a two component curable epoxy resin adhesive, but is not limited thereto and may be very thin double-sided tape. The thickness of the applied or attached adhesive retaining agent 47 is set to be negligibly smaller than the thickness of the bottom plate 55 of the resin case 5 (for example, 1.35 mm thick) and the thickness of the plastic material 41 (for example, 1.62 mm thick).

The adhesive retaining agent 47 may be applied or attached to the upper surface of the bottom plate 55 of the resin case 5, in place of the bottom surface 125 of the cell 12. Specifically, for example, the adhesive retaining agent 47 may be applied or attached to each area of the upper surface of the bottom plate 55 supporting the cell 12 between the adjacent division plates 556 and each area of the upper surface of the bottom plate 55 supporting the cell 12 between the division plate 556 and a corresponding one of the pair of the side walls 53.

When the cells 12 are contained in the resin case 5 while being positioned by the division plates 556, the bottom surface 125 of each of the cells 12 and the upper surface of the bottom plate 55 are bonded and fixed by the adhesive retaining agent 47. The bonding positions between the bottom plate 55 of the resin case 5 and the cells 12 by the adhesive retaining agent 47 are not limited to the example described above.

In the battery assembly 1, the cells 12 illustrated in FIG. 3 are tightly fixed to the metal plate 21 through the plastic materials 41, and the resin case 5 is also tightly fixed to the metal plate 21 through an adhesive 49 (FIG. 1). On the upper surface 212 of the metal plate 21, the insulating layer 214 is provided. The metal plate 21 has higher thermal conductivity than that of the resin case 5.

Examples of the metal plate 21 include an aluminum plate, an aluminum alloy plate, and a copper plate. The metal plate 21 is attached to the resin case 5 from the lower side where the bottom plate 55 is located, with respect to the height direction (Z-direction) of the battery assembly 1. In the example illustrated in FIG. 3, the metal plate 21 is formed in a substantially rectangular shape in the plan view, which has substantially the same size as that of the bottom plate 55 of the resin case 5. The metal plate 21 includes projections 217 projecting outward near the four corners of the metal plate 21. The metal plate 21 may be formed to have appropriate dimensions and a shape, as required.

As illustrated in FIGS. 1 and 3, the battery assembly 1 includes the thin sheet-like plastic materials 41. In the present embodiment, three of the plastic materials 41 are arranged. Each of the plastic materials 41 is formed in, for example, a substantially rectangular shape in the plan view so as to correspond to the shape of the frame hole 554 of the resin case 5 (refer to FIG. 4). Each of the plastic materials 41 is formed to have a size enough to be entirely inserted in the frame hole 554. Each of the frame holes 554 is almost filled with a corresponding one of the plastic materials 41. However, a small gap may be formed between the inner periphery of the frame hole 554 and the outer periphery of the plastic material 41 located in each of the frame holes 554 to allow the expansion of the plastic material 41 in the XY-directions associated with compressive deformation thereof caused by pressing in the Z-direction. In FIG. 1, each of the plastic materials 41 is illustrated in a state of being inserted in a corresponding one of the frame holes 554 of the bottom plate 55. In FIG. 3, the state before the plastic materials 41 are inserted into the frame holes 554 is illustrated. In FIG. 1, the illustration of the metal plate 21 of the battery assembly 1 is omitted for the sake of making explanation about the plastic materials 41.

Each of the plastic materials 41 illustrated in FIGS. 1 and 3 has higher thermal conductivity than that of the resin case 5 and air. Examples of the plastic material 41 include an electrically insulating plastic resin such as a silicone. Each of the plastic materials 41 has lower thermal conductivity than that of the metal plate 21 illustrated in FIG. 3. Each of the plastic materials 41 is sandwiched between the cells 12 and the metal plate 21 provided with the insulating layer 214 on the upper surface 212 thereof, with respect to the height direction of the battery assembly 1.

Each of the plastic materials 41 is located in a corresponding one of the areas 502 in the housing chamber 50 while being inserted in the frame hole 554 illustrated in FIG. 4. Each of the plastic materials 41 illustrated in FIG. 3 closely contacts and abuts on a corresponding one of the cell rows 15 of the cells 12 arranged in the Y-direction in a corresponding one of the areas 502. That is, in each of the cell rows 15, a corresponding one of the plastic materials 41 closely contacts and abuts on the bottom surface 125 of each of the cells 12 from the lower side where the metal plate 21 is located, with respect to the height direction (Z-direction) of the battery assembly 1.

For the plastic material 41, a material is selected to have properties of being compressively deformed by a predetermined thickness when a predetermined pressing force (for example, 2800 N) is applied from above to below in the Z-direction for a predetermined time (for example, 2 seconds) by a pressing machine or the like, and also have sufficient stickiness and adhesion to the bottom surfaces 125 of the cells 12 and the insulating layer 214 on the metal plate 21. The thickness of the plastic material 41 before being compressed is set to a thickness that can protrude downward by a predetermined thickness (for example, 0.070 mm) from the lower surface of the bottom plate 55 as illustrated in FIG. 1 when, for example, the plastic material 41 is placed in the frame hole 554 so that the upper surface of the plastic material 41 on the housing chamber 50 side of the resin case 5 is flush with the upper surface of the bottom plate 55.

The insulating layer 214 is provided on the entire surface or substantially the entire surface of the upper surface 212 of the metal plate 21 illustrated in FIG. 3. The upper surface 212 faces the side where the cells 12 are located. Therefore, the insulating layer 214 is located between each of the plastic material 41 and the bottom plate 55 of the resin case 5 and the metal plate 21 in the height direction of the battery assembly 1. The insulating layer 214 is a thin-film layer of, for example, epoxy resin formed from an electrically insulating resin, and is attached in advance in a sheet-like form to the upper surface 212 of the metal plate 21 such as an aluminum plate, or is formed by applying a liquid resin and then drying it so as to be integrated with the metal plate 21.

The insulating layer 214 formed on the upper surface of the metal plate 21 may be made of, for example, pre-preg or the like obtained by impregnating a fiber material (such as carbon, silicon carbide, or aramid) with insulating resin material (such as epoxy resin, cyanate ester resin, or benzoxazine resin), or made by attaching the sheet-like pre-preg to the upper surface 212 of the metal plate 21 in advance or curing the pre-preg on the upper surface 212 of the metal plate 21 to integrate the pre-preg with the metal plate 21.

The bottom plate 55 of the resin case 5 illustrated in FIG. 3 abuts on the insulating layer 214 through the adhesive 49 (refer to FIG. 1) from the side where the cells 12 included in the cell row 15 are located, with respect to the height direction. Each of the plastic materials 41 closely contacts and abuts on the insulating layer 214 from the side where the cells 12 included in the cell row 15 are located, with respect to the height direction of the cells 12. Each of the three cell rows 15 is electrically insulated from the metal plate 21 by, for example, the resin case 5, the plastic material 41, and the insulating layer 214.

Heat generated by charge and discharge of each of the cell rows 15 is transferred to the metal plate 21 through a corresponding one of the plastic materials 41 and the insulating layer 214. Thus, a heat-transfer path, which does not pass through the air, is formed from the cells 12 to the metal plate 21 by the plastic material 41 and so forth.

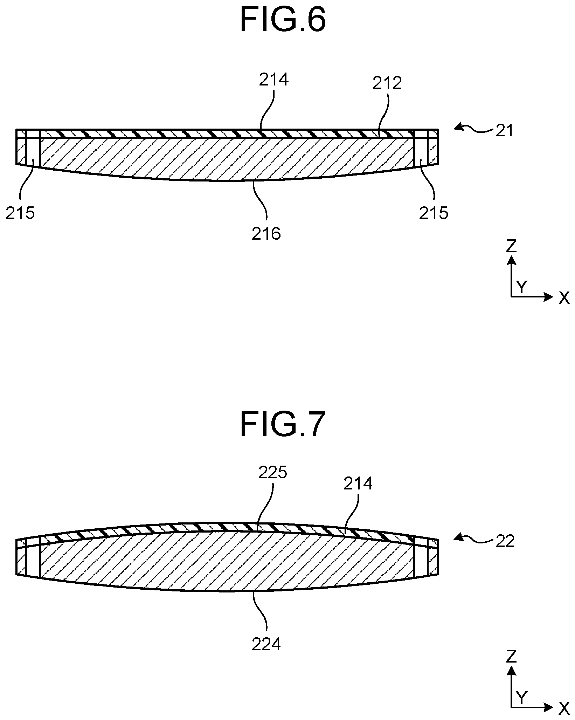

As in the present embodiment illustrated in FIGS. 3 and 6, the metal plate 21 has, for example, a thickness of 0.5 mm to 5 mm. The metal plate 21 has a lower surface 216 being a convex surface that is located at a position corresponding to the cells (for example, a total of four cells 12 consisting of the third to sixth cells in the central cell row 15) that are located in the middle of the resin case 5 illustrated in FIGS. 3 to 5, namely, in the middle area of the bottom plate 55. In other words, the lower surface 216 has a convex curvature that gradually becomes high from the outer peripheral side area toward the middle area of the lower surface 216 in the directions of parallel arrangement of the cells 12 located on the metal plate 21 (XY-directions). The metal plate 21 may be formed in a flat plate shape having a thickness of approximately from 0.5 mm to 5 mm, and having the flat upper surface 212 and the flat lower surface 216.

The above-described four cells 12, which are located in the middle area of the bottom plate 55 illustrated in FIGS. 3 and 5 and located near the center of the battery assembly 1, are surrounded by the other cells 12. Therefore, those four cells 12 are located at a hot spot where the temperature tends to be particularly high. The four cells 12 at the hot spot are hereinafter referred to as a cell group 129. The metal plate 21 illustrated in FIG. 6 has the lower surface 216 being a convex surface, as described above. The middle of the lower surface 216 corresponds to the position of the cell group 129 illustrated in FIG. 3, which is the hot spot surrounded by the others of the cells 12 in the directions in which the cells 12 are arranged in parallel. The convex curvature of the lower surface 216 of the metal plate 21 is slight, and the degree of the curvature thereof is determined as appropriate according to the number of the cells 12 of the hot spot. The upper surface 212 and the insulating layer 214 of the metal plate 21 illustrated in FIGS. 3 and 6 are substantially flat surfaces in the illustrated example.

The battery assembly 1 may include a metal plate 22 illustrated in FIG. 7 instead of the metal plate 21 illustrated in FIGS. 3 and 6. The metal plate 22 in FIG. 7 has a convex curvature substantially the same as that of the metal plate 21 illustrated in FIG. 6 on a lower surface 224 side, and also has a convex curvature on an upper surface 225 side of the metal plate 22. In other words, the entire metal plate 22 illustrated in FIG. 7 has a shape like a double convex lens. The insulating layer 214 provided on the upper surface 225 of the metal plate 22 is curved along the convex curvature.

The battery assembly 1 includes the adhesive 49 that bonds the lower surface of the bottom plate 55 of the resin case 5 illustrated in FIG. 1 to the insulating layer 214 (refer to FIG. 3) provided on the upper surface 212 of the metal plate 21. As the adhesive 49 illustrated in FIG. 1, a two component curable epoxy resin adhesive, for example, may be used, or double-sided tape may be used. An example of the adhesive 49 is double-sided tape obtained by applying an acrylic adhesive to a base material, and has a thickness set to approximately 0.2 mm to 0.3 mm. Preferably, the adhesive 49 has good followability to surface roughness of an adherend and has an excellent adhesion property and a waterproof property. Moreover, preferably, the adhesive 49 firmly adheres to metals and plastics, and has an excellent adhesion property to polypropylene and the like that are generally difficult to adhere.

For example, as in the example illustrated in FIG. 1, the adhesive 49 is continuously provided in a quadrilateral ring shape in the plan view in an area on the outer peripheral side of the lower surface of the bottom plate 55. In addition to being provided in a quadrilateral ring shape, the adhesive 49 may also be provided in a belt-like shape extending in the Y-direction on the lower surface of the bottom plate 55 located between the plastic material 41 and the plastic material 41 that are inserted in the frame holes 554 formed in the bottom plate 55 and are adjacent to each other. For example, the adhesive 49 may be provided in each of four locations that are near the inside of the four corner portions of the area on the outer peripheral side of the lower surface of the bottom plate 55.

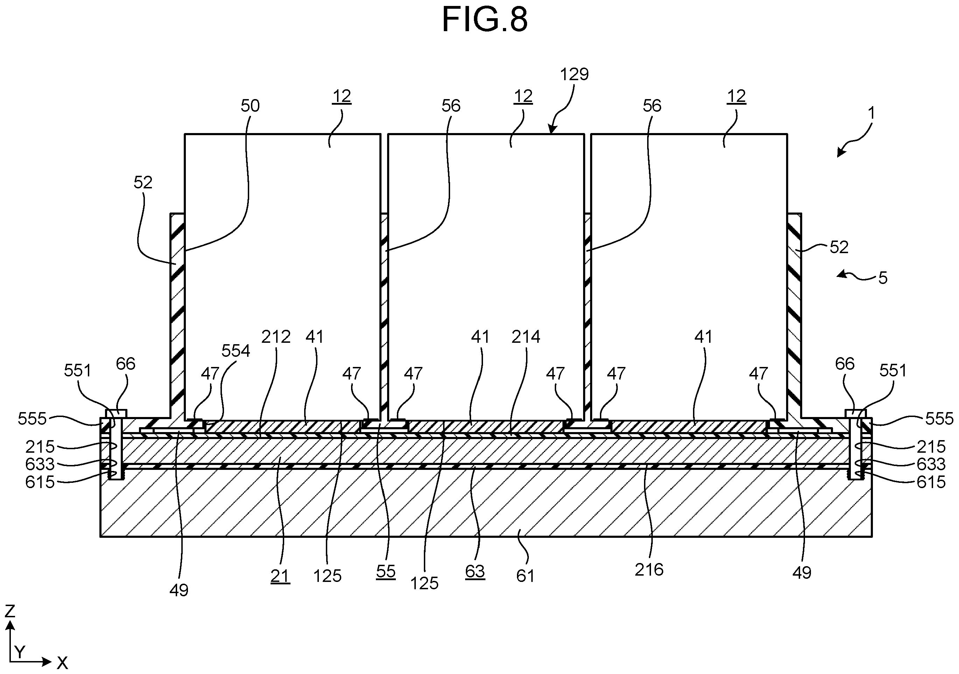

A platform 61 illustrated in FIG. 8 is a metal base that supports and fixes the battery assembly 1. The cells 12, the resin case 5, the plastic materials 41, and the metal plate 21 included in the battery assembly 1 are mounted on the platform 61. The platform 61 has higher thermal conductivity than that of the resin case 5 and the plastic materials 41, and has substantially the same level of thermal conductivity as that of the metal plate 21, for example.

The battery assembly 1 illustrated in FIGS. 1, 3-5, and 8 is used as, for example, a power source for stationary use or a power source for railway vehicles. In a case that the battery assembly 1 is used for railway vehicles, a large number of the cells 12 are connected in series in a state where the battery assemblies 1 are stacked up and down in a shelf-like manner, and thus, high cooling performance is required. Therefore, the platform 61 that serves as a cooling plate may be provided at a part where the battery assemblies 1 contact each other, and may perform forced cooling by providing a flow path allowing flow of a cooling fluid including a cooling liquid, a cooling gas, or the like in the platform 61 and circulating the fluid, for example.

The platform 61 illustrated in FIG. 8 is located on the opposite side of the side where the cells 12 are located with respect to the metal plate 21, with respect to the height direction (Z-direction) of the battery assembly 1. The platform 61 is spaced from the metal plate 21 toward a side opposite to the side where the cells 12 are located. There is a clearance between the metal plate 21 and the platform 61 with respect to the height direction of the battery assembly 1. In one example, the clearance between the metal plate 21 and the platform 61 is approximately 0.2 mm. A plastic sheet 63 included in the battery assembly 1 is provided in the clearance between the metal plate 21 and the platform 61. The plastic sheet 63 is formed from, for example, an electrically insulating plastic resin such as a silicone grease. The clearance between the metal plate 21 and the platform 61 is filled with the plastic sheet 63. As a result, the plastic sheet 63 is sandwiched between the lower surface 216 of the metal plate 21 and the platform 61 with respect to the height direction of the battery assembly 1. The plastic sheet 63 closely contacts and abuts on each of the lower surface 216 of the metal plate 21 and the platform 61.

A material having higher thermal conductivity than that of air and the resin case 5 is used as the plastic sheet 63. However, the plastic sheet 63 has lower thermal conductivity than that of the metal plate 21 and the platform 61. The heat generated in each of the cells 12 is transferred to the platform 61 through a corresponding one of the plastic materials 41, the metal plate 21 provided with the insulating layer 214, and the plastic sheet 63, in this order. That is, the plastic sheet 63 transfers the heat transferred from the metal plate 21 to the platform 61. Thus, the plastic material 41, the metal plate 21, the plastic sheet 63, and other materials form a heat-transfer path that does not pass the air from the cells 12 to the platform 61.

As illustrated in FIGS. 1, 3, 4, and 5, rectangular cutouts 520 are formed at four corner portions of outer lateral surfaces of the pair of side walls 52 of the resin case 5 from the outside toward the inside. The upper surface of the bottom plate 55 outside the resin case 5 is partly exposed in the cutouts 520. The bottom plate 55 exposed in the cutouts 520 is provided with projecting ends 555 projecting outward. In each of the four projecting ends 555 located at the four corners of the resin case 5, a first through-hole 551 is formed from the upper surface of the projecting end 555 to the lower surface of the bottom plate 55. Thus, the first through-hole 551 is provided in each of positions that are outside the housing chamber 50 of the resin case 5 illustrated in FIGS. 3 and 4, and are, for example, four corners of the resin case 5. As illustrated in FIG. 1, each of the first through-holes 551 is provided in a position outside of the adhesive 49 (refer to FIG. 1) provided in the quadrilateral ring shape on the lower surface of the bottom plate 55 of the resin case 5, for example.

For example, as illustrated in FIG. 3, the four projections 217 partly projecting outward in a convex shape are provided near the four corners of the metal plate 21. The insulating layer 214 is also provided on the upper surface of the projections 217. In the projections 217, second through-holes 215 corresponding to and communicating with the four respective first through-holes 551 of the bottom plate 55 in the Z-direction are formed. The second through-holes 215 penetrate the insulating layer 214 provided on the projections 217 in the Z-direction.

The platform 61 and the plastic sheet 63 illustrated in FIG. 8 are formed in a substantially rectangular shape in the plan view, and the size thereof is set to be substantially the same as that of the bottom plate 55 of the resin case 5. At the four corner portions of the plastic sheet 63 illustrated in FIG. 8 (only two are illustrated), third through-holes 633 are formed that are located without being misaligned from the first through-holes 551 of the resin case 5 and the second through-holes 215 of the metal plate 21.

At each of the four corner portions of the platform 61 (only two are illustrated), a bolt hole 615 is formed. The bolt hole 615 is located without misalignment from the corresponding first, second, and third through-holes 551, 215, and 633. A bolt 66 illustrated in, for example, FIGS. 3, 5, and 8 is inserted into the first, second, and third through-holes 551, 215, and 633, and is screwed to engage with the bolt hole 615. Then, by inserting and screwing the bolts 66 in the same manner at all the four corners of the resin case 5, the resin case 5, the metal plate 21 provided with the insulating layer 214 on the upper surface 212 thereof, and the platform 61 are fastened to be fixed together and integrated with each other as illustrated in FIG. 8. As illustrated in FIGS. 3 and 8, the bolt 66 is provided outside the housing chamber 50, and is located on the opposite side of the side where the housing chamber 50 is located with respect to each of the pair of the side walls 52 of the resin case 5.

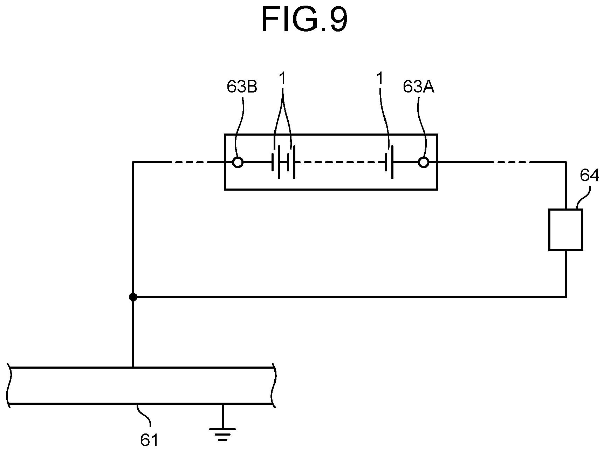

FIG. 9 is an example of a circuit configuration formed by the battery assembly 1. The battery assembly 1 includes a pair of external terminals 63A and 63B. The external terminal 63A is a positive electrode external terminal of the battery assembly 1, and the external terminal 63B is a negative electrode external terminal of the battery assembly 1. The battery assembly 1 is electrically connected to a power supply/load 64. The battery assembly 1 is charged by supplying power from the power supply to the battery assembly 1. The battery assembly 1 is discharged by supplying power from the battery assembly 1 to the load.

In the example illustrated in FIG. 9, the platform 61 is grounded, and the potential of the platform 61 is set to GND. A GND-side path of the current path of the current flowing through the battery assembly 1 is connected to the platform 61. In the battery assembly 1, the external terminal (positive electrode external terminal) 63A is connected to, for example, the load with or without another battery assembly 1 interposed therebetween. In the battery assembly 1, the external terminal (negative electrode external terminal) 63B is connected to the ground-side path (platform 61) with or without another battery assembly 1 interposed therebetween. When the external terminal 63B is connected to the ground-side path without another battery assembly 1 interposed therebetween, the potential of the external terminal 63B of the battery assembly 1 (negative electrode potential) matches the potential of the platform 61, which is the GND potential. For example, when, the battery assembly 1 is used in a railway vehicle, for example, the platform 61 is set to GND.

The following describes examples of steps of a method for manufacturing the battery assembly 1 of the embodiment described above with reference to FIGS. 1 to 8.

### (i) Adhesive providing step

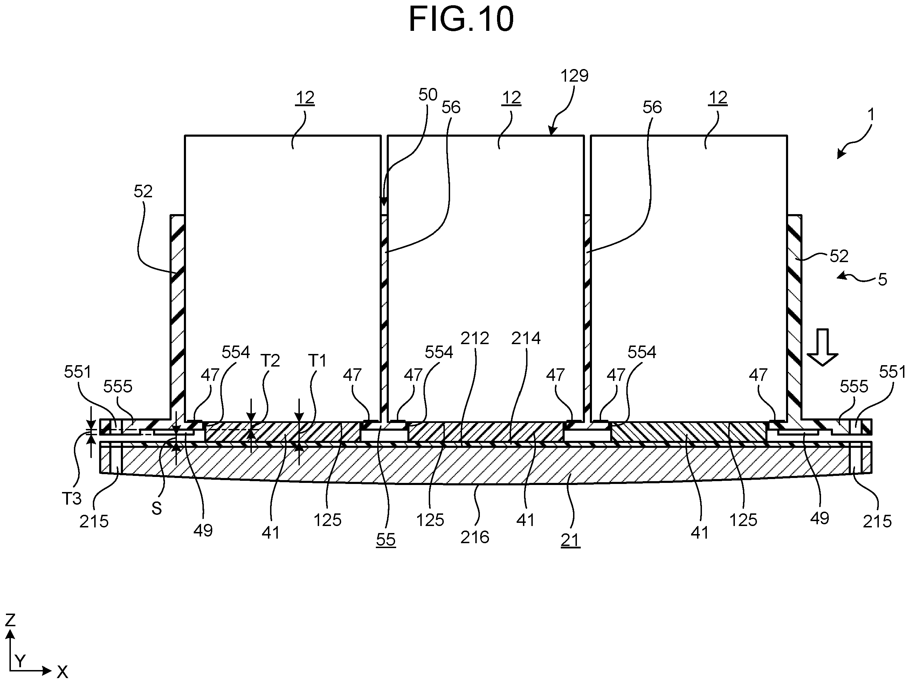

In the method for manufacturing the battery assembly 1, the adhesive 49 is applied or attached to a position on the bottom plate 55 of the resin case 5 (FIGS. 1 and 10) in a shape like a single continuous quadrilateral ring in the plan view. The position of the adhesive 49 is located at an area on the outer peripheral side of the lower surface of the bottom plate 55, and is located on an inner side of the first through-holes 551. In the present embodiment, the thickness of the adhesive 49 is set to 0.2 mm, for example.

### (ii) Bonding step

In parallel with, or before, or after the adhesive providing step described above, the adhesive retaining agent 47 is applied or attached to a plurality of points (for example, two points) in an area of the bottom surface 125 of each of the cells 12 contained in the housing chamber 50 of the resin case 5 illustrated in FIGS. 3 and 10. The area for the adhesive retaining agent 47 is other than an area facing the plastic material 41.

The adhesive retaining agent 47 may be applied or attached to the upper surface of the bottom plate 55 of the resin case 5, instead of to the cell 12 side. That is, for example, the adhesive retaining agent 47 may be applied or attached to each area of the upper surface of the bottom plate 55 illustrated in FIGS. 3 and 4 where the bottom plate 55 supports the bottom surface 125 of the cell 12, such as each area between the adjacent division plates 556 and each area between the division plate 556 and a corresponding one of the pair of the side walls 53.

Then, by sequentially positioning and arranging the cells 12 illustrated in FIGS. 3 and 10 in the three areas 502 of the housing chamber 50 of the resin case 5 by using the division plates 556 (refer to FIG. 3), the bottom surface 125 of each of the cells 12 is adhesively fixed to the upper surface of the bottom plate 55 of the resin case 5 by the adhesive retaining agent 47. Part of the bottom surface 125 of the cell 12 faces the frame hole 554 of the bottom plate 55 in the Z-direction.

Moreover, while arranging the separators 13 (refer to FIG. 3) between the adhesively fixed cells 12 illustrated in FIG. 10 in the Y-direction, the cells 12 are arranged in parallel in each area 502 of the housing chamber 50 of the resin case 5 to form the cell row 15 illustrated in FIG. 3.

### (iii) Fixing step

In parallel with, or before, or after the adhesive providing step and the bonding step described above, the metal plate 21 illustrated in FIGS. 3 and 10 is placed on the press table (not illustrated) with the insulating layer 214 facing upward. Moreover, the three plastic materials 41 are placed on the insulating layer 214 of the metal plate 21 at predetermined intervals. Then, the resin case 5 is adjusted and moved in the XY-directions on the plastic materials 41 so that the plastic materials 41 can be inserted one-by-one into the three frame holes 554 of the resin case 5 containing the cells 12 bonded by the adhesive retaining agent 47 to the bottom plate 55 illustrated in FIG. 10, thus causing each of the frame holes 554 to face a corresponding one of the plastic materials 41 in the Z direction.

After the above adjustment, the resin case 5 is lowered, and the plastic materials 41 are inserted into the frame holes 554 of the bottom plate 55 of the resin case 5. Additionally, the upper surfaces of the three plastic materials 41 are made to abut on the bottom surface 125 of each of the cells 12, as illustrated in FIG. 10.

In one example, a thickness T1 of the plastic material 41 illustrated in FIG. 10 before compressive deformation is 1.62 mm, a thickness T2 of the bottom plate 55 of the resin case 5 is 1.35 mm, and a thickness T3 of the adhesive 49 provided on the lower surface of the bottom plate 55 is 0.2 mm. The thickness of the adhesive retaining agent 47 bonding the upper surface of the bottom plate 55 of the resin case 5 to the bottom surface 125 of each of the cells 12 is a negligible thickness compared with the thicknesses T1, T2, and T3 mentioned above. As illustrated in FIG. 10, when the cells 12 abut on the upper surfaces of the plastic materials 41 and the plastic materials 41 have not yet been pressed in the Z-direction and not yet been compressively deformed, the thickness T1 of the plastic materials 41 is thicker (larger) than the sum of the thickness of the adhesive retaining agent 47, the thickness T2 of the bottom plate 55 of the resin case 5, and the thickness T3 of the adhesive 49.

By setting the thickness T1 of the plastic materials 41 as described above, a gap S having a predetermined size is formed between the lower surface of the adhesive 49 provided on the lower surface of the bottom plate 55 and the insulating layer 214 provided on the metal plate 21 and facing the adhesive 49 at the stage where the upper surfaces of the three plastic materials 41 abut on the respective bottom surfaces 125 of the cells 12 as illustrated in FIG. 10. The size of the gap S is, for example, represented as follows: thickness T1 of plastic material 41 - (thickness T2 of bottom plate 55 of resin case 5 + thickness T3 of adhesive 49 provided on lower surface of bottom plate 55) = 1.62 mm - (1.35 mm + 0.2 mm) = 0.07 mm. The size of this gap S = 0.07 mm is the amount of crush of the plastic material 41.

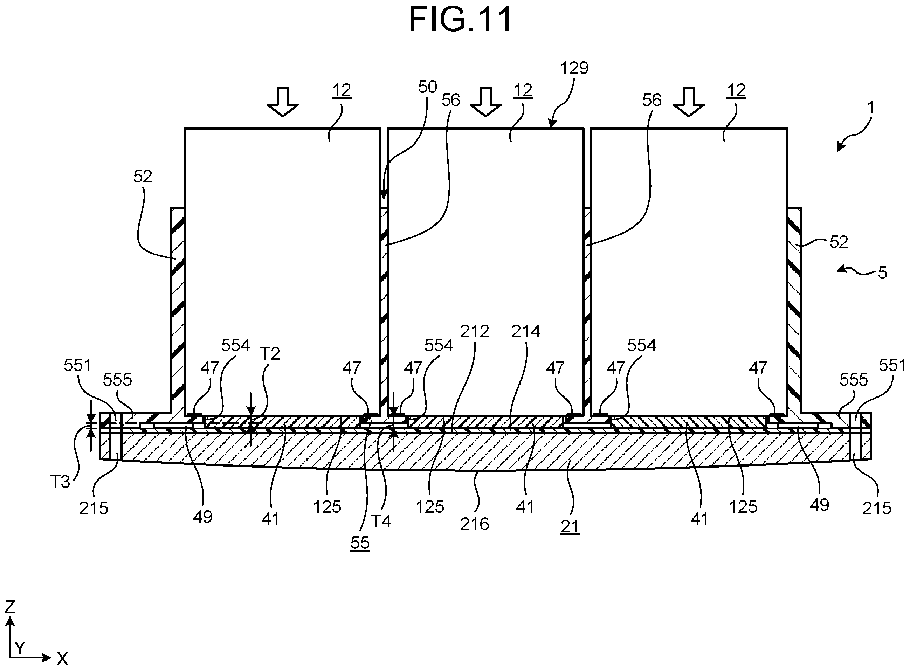

Subsequently, all the cells 12 contained in the resin case 5 in the state of being placed on the press table (not illustrated) are pressed toward the plastic materials 41 below while controlling the pressing force applied to the cells 12 from above to be uniform, as illustrated in FIG. 11. The direction of the pressing force pressing the cells 12 is orthogonal to the upper surface 212 of the metal plate 21. For example, the press is performed for 2 seconds at a pressing force of 2800 N.

By performing the pressing as described above, the plastic materials 41 are compressively deformed in the Z-direction by the size of the gap S illustrated in FIG. 10, that is, 0.07 mm. Then, as illustrated in FIG. 11, the bottom surface 125 of each of the cells 12 is closely in contact with the upper surface of the plastic material 41, and the lower surface of the plastic material 41 is closely in contact with the insulating layer 214. The adhesive 49 provided on the lower surface of the bottom plate 55 of the resin case 5, which is lowered in accordance with the compressive deformation of the plastic material 41, is bonded to the insulating layer 214 provided on the metal plate 21. Thereby, the resin case 5 is adhesively fixed to the insulating layer 214, and assembled as the battery assembly 1. The thickness of the projecting end 555 that is part of the bottom plate 55 and has the first through-hole 551 formed therein is set to be further larger than the thickness of the other portions of the bottom plate 55 by, for example, by thickness of the adhesive 49, and the pressing causes the lower surface of the projecting end 555 to contact the insulating layer 214.

For example, at the fixing step in the present embodiment, a thickness T4 of the plastic material 41 after the compressive deformation illustrated in FIG. 11 is set to be equal to the sum of the thickness of the adhesive retaining agent 47 (negligibly small thickness), the thickness T2 of the bottom plate 55 of the resin case 5, and the thickness T3 of the adhesive 49.

### (iv) Fastening step

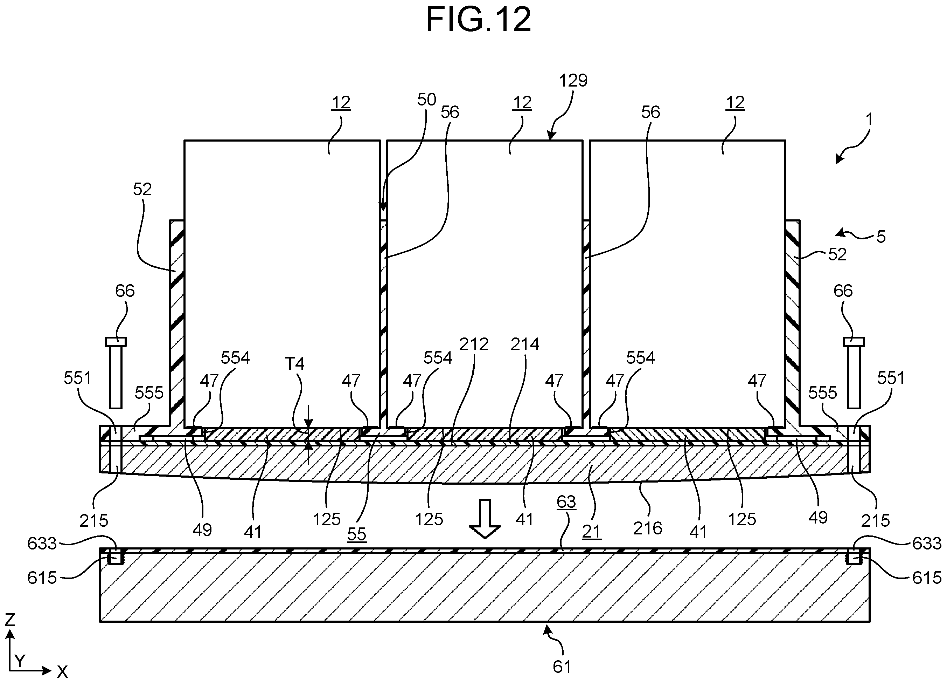

The method for manufacturing the battery assembly of the present embodiment further includes a fastening step performed after the fixing step described above. In the fastening step, the platform 61 supporting the battery assembly 1 in FIG. 12, the resin case 5, and the metal plate 21 provided with the insulating layer 214, are fixed by the bolts 66.

After the foregoing fixing step, the resin case 5, the cells 12, the metal plate 21 with the insulating layer 214, and other components illustrated in FIG. 12 are integrated, and the lower surface 216 being the convex curved surface of the metal plate 21 serves as a lower surface of the entire battery assembly 1. The middle of the lower surface 216 is located below the cells 12 surrounded by the others of the cells 12 in the resin case 5 in the directions in which the cells 12 are arranged in parallel, specifically, below the sell group 129 that serves as the hot spot located in the middle of the resin case 5 illustrated in FIGS. 3 to 5, that is, in the middle area of the bottom plate 55.

The platform 61 having a rectangular shape in the plan view is placed on a table (not illustrated). The plastic sheet 63 is placed on the platform 61. The bolt hole 615 located in each of the four corner portions of the platform 61 and the third through-hole 633 located in a corresponding one the four corner portions of the plastic sheet 63 are made to overlap and communicate with each other. The plastic sheet 63 may be adhesively fixed to the upper surface of the platform 61 in advance, and thus, the platform 61 may be integrated with the plastic sheet 63.

Then, the resin case 5 by which the cells 12 and the metal plate 21, etc. are integrated together is positioned on the upper surface of the plastic sheet 63. The first through-hole 551 of the resin case 5, the second through-hole 215 of the metal plate 21, the third through-hole 633 of the plastic sheet 63, and the bolt hole 615 of the platform 61 are aligned so as to overlap and communicate with each other. As a result, the plastic sheet 63 is sandwiched between the lower surface 216 of the metal plate 21 and the platform 61.

Moreover, the bolt 66 illustrated in FIG. 12 is inserted into the first, second, and third through-holes 551, 215, and 633, and is screwed to engage with the bolt hole 615. By inserting and screwing the bolts 66 in the same manner at all the four corners of the resin case 5, the resin case 5, the metal plate 21 provided with the insulating layer 214 on the upper surface 212 thereof, the plastic sheet 63, and the platform 61 are fastened to be fixed together and integrated with each other as illustrated in FIG. 8. Each of the bolts 66 is located on the opposite side of the side where the housing chamber 50 is located with respect to each of the pair of the side walls 52 of the resin case 5. The lower surface 216 of the metal plate 21 having the convex curvature is pushed upward in the height direction of the battery assembly 1, and becomes a flat surface to closely contact the plastic sheet 63 while being internally stressed. The platform 61 and the plastic sheet 63 are brought into a close contact state with each other.

As described above, according to the manufacturing method of the embodiment and the battery assembly 1 illustrated in FIG. 8 manufactured by the manufacturing method of the embodiment, the metal plate 21, which is provided with the insulating layer 214, and the resin case 5, in which the cells 12 contained in the housing chamber 50 are adhesively fixed by the adhesive retaining agent 47, can be bonded and integrated together at one time by using the adhesive 49 and pressing the cells 12. In addition, the plastic material 41 can be brought into close contact with the bottom surfaces 125 of the cells 12 and the insulating layer 214 while being compressed between the bottom surfaces 125 of the cells 12 and the insulating layer 214 by the pressing. Therefore, the battery assembly 1 can be manufactured in a short time and at a lower cost than before, while increasing the stiffness of the battery assembly 1 as a whole.

Moreover, the adhesive 49 is used to adhesively fix the insulating layer 214 provided on the metal plate 21 to the resin case 5 containing the cells 12. Therefore, the level of difficulty of molding the resin case 5 itself can be reduced, and the case strength satisfying desired vibration conditions (such as the United Nations transportation vibration test conditions applied to the battery assembly 1 that is designated as a dangerous article) can be ensured with fewer design considerations. Additionally, the total weight and size of the battery assembly 1 can be reduced.

In the battery assembly 1 of the embodiment, by using the double-sided tape as the adhesive retaining agent 47, a worker can easily attach the adhesive retaining agent 47 to the bottom surface 125 of the cell 12.

In the method for manufacturing the battery assembly 1 of the present embodiment, the heat-dissipating platform 61 is mounted on the lower surface 216 of the metal plate 21 with the plastic sheet 63 interposed therebetween by performing the fastening step after the fixing step. At the fastening step, the heat dissipation performance of the metal plate 21 can be sufficiently ensured for the cell group 129 of the hot spot located in the middle area of the bottom plate 55 of the resin case 5. That is, even when the bolt 66 is inserted into the first, second, and third through-holes 551, 215, and 633, and is screwed to engage with the bolt hole 615 at each of the four corners of the resin case 5, as in the present embodiment, the lower surface 216 of the metal plate 21 that contacts the platform 61 with the plastic sheet 63 interposed therebetween has the convex curved surface, so that the battery assembly 1 can be fixed to the platform 61 while the metal plate 21 has a stress toward the platform 61. Therefore, in the metal plate 21, even in the middle of the lower surface 216 located far from the four corner portions that ensure sufficient surface pressure toward the platform 61 side by being fastened by the bolts 66, the surface pressure toward the platform 61 side can be ensured. As a result, the contact thermal resistance of the middle of the metal plate 21 corresponding to the cell group 129 of the hot spot can be prevented from increasing. At the same time, the thickness of the plastic sheet 63 between the lower surface 216 of the metal plate 21 and the platform 61 can be made smaller, thus allowing reduction of cost and weight.

Even when the metal plate 22 having the convex curvature on the lower surface 224 and the convex curvature also on the upper surface 225 illustrated in FIG. 7 is used instead of the metal plate 21 illustrated in FIG. 6, the same theory can be used to prevent the contact thermal resistance of the middle of the metal plate 22 corresponding to the cell group 129 of the hot spot from increasing. At the same time, the thickness of the plastic sheet 63 can be made smaller, thus allowing the reduction of cost and weight.

### Modification

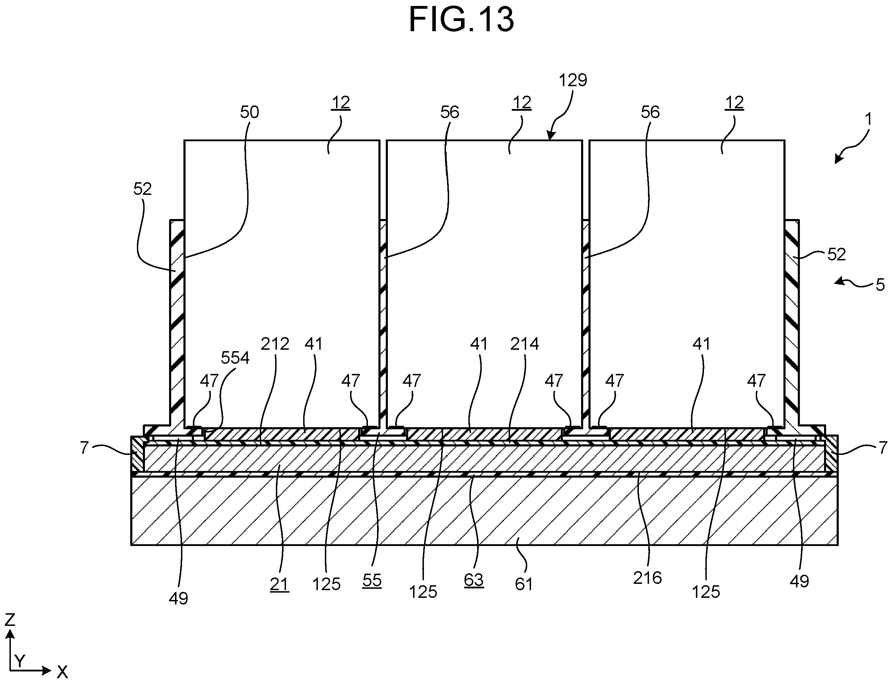

The battery assembly 1 may include Kapton (registered trademark) tape 7 illustrated in FIG. 13, for example. The Kapton tape 7 is a super heat-resistant, super cold-resistant polyimide film, and also has high insulating properties. The Kapton tape 7 is affixed, for example, to an area extending from an outer peripheral edge of the lower surface of the bottom plate 55 of the resin case 5 to an outer peripheral edge of the metal plate 21 provided with the insulating layer 214, illustrated in FIGS. 5 and 13. That is, for example, the adhesive 49 provided in the quadrilateral ring shape in the plan view is present between the bottom plate 55 of the resin case 5 and the metal plate 21 provided with the insulating layer 214, and in the battery assembly 1 after being assembled by undergoing the fixing step, the outer peripheral surface of the adhesive 49 is exposed if the Kapton tape 7 is absent (in the case illustrated in FIG. 5).

Therefore, for example, the Kapton tape 7 having an inverted L-shape in a sectional view illustrated in FIG. 13 is affixed along substantially the entire perimeter of the outer peripheral edge of the bottom surface of the bottom plate 55 of the resin case 5 between the bottom plate 55 of the resin case 5 and the metal plate 21 provided with the insulating layer 214, and substantially the entire perimeter of the outer peripheral surface of the quadrilateral ring shaped adhesive 49 is surrounded by the Kapton tape 7.

Since the battery assembly 1 includes the Kapton tape 7, the Kapton tape 7 that has high insulating properties and surrounds the outer peripheral surface of the adhesive 49 provided in the quadrilateral ring shape on the lower surface of the bottom plate 55 can prevent the external short circuit passing through the bottom surfaces 125 of the cells 12 illustrated in FIG. 13, a slight gap between the inner periphery of the frame hole 554 of the resin case 5 and the outer periphery of the plastic material 41 inserted in the frame hole 554, and the adhesive 49. Therefore, the battery assembly 1 can be used under higher voltages.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A battery assembly (1) comprising:
a plurality of cells (12);
a resin case (5) configured to contain the cells (12) arranged in parallel while interposing separators (13) between the cells (12);
a metal plate (21) whose upper surface (212) faces a bottom plate (55) of the resin case (5) and faces bottom surfaces (125) of the cells (12);
an insulating layer (214) provided on the upper surface (212) of the metal plate (21);
an adhesive retaining agent (47) configured to bond the bottom surfaces (125) of the cells (12) contained in the resin case (5) to the bottom plate (55) of the resin case (5);
an adhesive (49) configured to bond the bottom plate (55) of the resin case (5) to the insulating layer (214); and
a plastic material (41) inserted in a frame hole (554) penetrating the bottom plate (55) of the resin case (5), the plastic material (41) being closely in contact with the bottom surfaces (125) of the cells (12) and the insulating layer (214) while being compressed between the bottom surfaces (125) of the cells (12) and the insulating layer (214).

2. The battery assembly according to claim 1, wherein the adhesive retaining agent (47) is double-sided tape.

3. The battery assembly according to claim 1, further comprising a plastic sheet (63), wherein
the resin case (5) includes
a housing chamber (50) configured to contain the cells (12), and
a first through-hole (551) into which a bolt (66) is inserted, the first through-hole (551) being provided outside the housing chamber (50),
the metal plate (21) includes
a second through-hole (215) into which the bolt (66) is inserted, the second through-hole (215) communicating with the first through-hole (551), and
a lower surface (216) being a convex surface whose middle part is located in a position corresponding to one or more of the cells (12) in the resin case (5), the one or more of the cells (12) being surrounded by the others of the cells (12), and
the resin case (5), the metal plate (21), and a platform (61) supporting the battery assembly (1) are fixed by the bolt (66) in a state where the plastic sheet (63) is sandwiched between the lower surface (216) of the metal plate (21) and the platform (61), the bolt (66) being inserted in the first through-hole (551) and the second through-hole (215) and being screwed to engage with a bolt hole (615) of the platform (61).

4. The battery assembly according to claim 3, wherein the upper surface (212) of the metal plate (21) is a convex surface.

5. The battery assembly according to any one of claims 1 to 4, wherein the insulating layer (214) is pre-preg obtained by impregnating fibers with insulating resin.

6. A method for manufacturing the battery assembly (1) according to claim 1, the method comprising:
performing an adhesive providing step to provide the adhesive (49) on the bottom plate (55) of the resin case (5);
performing a bonding step to bond the bottom surfaces (125) of the cells (12) contained in the resin case (5) to the bottom plate (55) of the resin case (5); and
performing a fixing step after inserting the plastic material (41) into the frame hole (554) of the bottom plate (55) of the resin case (5), the fixing step including
closely attaching the plastic material (41) to the insulating layer while deforming the plastic material (41) by pressing the cells (12) toward the plastic material (41), and
adhering and fixing the resin case (5) to the insulating layer (214) by the adhesive (49).

7. The method according to claim 6, wherein
a thickness of the plastic material (41) before the deformation in the fixing step is larger than a sum of respective thickness of the adhesive retaining agent (47), the bottom plate (55) of the resin case (5), and the adhesive (49), and
the fixing step is performed to equalize the thickness of the plastic material (41) after the deformation to the sum of respective thickness of the adhesive retaining agent (47), the bottom plate (55) of the resin case (5), and the adhesive (49).

8. The method according to claim 6 or 7, further comprising performing, after the fixing step, a fastening step to fix a platform (6) supporting the battery assembly (1), the resin case (5), and the metal plate (21) by a bolt (66), wherein
the resin case (5) includes
a housing chamber (50) configured to contain the cells (12), and
a first through-hole (551) into which the bolt (66) is inserted, the first through-hole (551) being provided outside the housing chamber (50),
the metal plate (21) includes
a second through-hole (215) into which the bolt (66) is inserted, the second through-hole (215) being configured to communicate with the first through-hole (551), and
a lower surface (216) being a convex surface whose middle part is located in a position corresponding to one or more of the cells (12) in the resin case (5), the one or more of the cells (12) being surrounded by the others of the cells (12), and
the fixing step is performed to fix the resin case (5), the metal plate (21), and the platform (61) by the bolt (66) in a state where the plastic sheet (63) is sandwiched between the lower surface (216) of the metal plate (21) and the platform (61), the bolt (66) being inserted in the first through-hole (551) and the second through-hole (215) and being screwed to engage with a bolt hole (615) of the platform (61).
